(19) Europäisches Patentamt
European Patent Office
Office européen des brevets

(11) **EP 4 489 343 A1**

(12) **EUROPEAN PATENT APPLICATION**
published in accordance with Art. 153(4) EPC

(43) Date of publication:
**08.01.2025  Bulletin 2025/02**

(21) Application number: **22927884.1**

(22) Date of filing: **28.02.2022**

(51) International Patent Classification (IPC):
*H04L 9/32* (2006.01)

(52) Cooperative Patent Classification (CPC):
**H04L 9/32**

(86) International application number:
**PCT/CN2022/078411**

(87) International publication number:
**WO 2023/159603 (31.08.2023 Gazette 2023/35)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventor: **GAN, Lu
Dongguan, Guangdong 523860 (CN)**

(74) Representative: **Novagraaf Technologies
Bâtiment O2
2, rue Sarah Bernhardt
CS90017
92665 Asnières-sur-Seine Cedex (FR)**

(54) **SECURITY IMPLEMENTATION METHOD AND APPARATUS, TERMINAL DEVICE, AND
NETWORK ELEMENTS**

(57)    Embodiments of the present application provide a security implementation method and apparatus, a terminal device, and network elements. The method comprises: a terminal device receives first request information, wherein the first request information is used for requesting the authorization of the terminal device so as to transmit perception data, and the first request information comprises an authorization certificate of a first network element; and when the terminal device successfully verifies the authorization certificate, the terminal device authorizes sending the perception data.

```
┌─────────────┐                                          ┌─────────────┐
│  Terminal   │                                          │First network│
│   device    │                                          │   element   │
└──────┬──────┘                                          └──────┬──────┘
       │     S210 and S220: First request information,          │
       │     wherein the first request                         │
       │  information is configured to request an authorization│
       │  from the terminal device for transmission of sensing │
       │  data, and the first request information              │
       │◄── includes an authorization certification of the ────│
       │         first network element                         │
┌──────┴──────────────────────────┐                            │
│ S230: Authorizing the           │                            │
│ transmission of the             │                            │
│ sensing data in response to a   │                            │
│ successful verification on the  │                            │
│ authorization certification     │                            │
└─────────────────────────────────┘                            │
```

FIG. 2

**Description**

**TECHNICAL FIELD**

Embodiments of the present disclosure relates to the technical field of mobile communications, and in particular, relate to a method and apparatus for implementing security, a terminal device, and a network element.

**BACKGROUND**

With developments of communications technologies, an integrated sensing and communication technology that can achieve sensing of everything, Internet of everything, and intelligence of everything becomes a focus in the field. The integrated sensing and communication technology refers to a technology integrating communication and sensing together. The communication refers to information transmission between two or more points, and the sensing refers to sensing of physical environment information, such as speed measurement, target positioning, and the like. The integrated sensing and communication technology enables future communication systems to implement both the communication function and the sensing function. In the case that the information is transmitted over wireless channels, physical features of the surrounding environment are sensed by actively recognizing and analyzing features of the channels, such that the communication function and the sensing function are improved. For example, the communication system senses the physical environment information using a user device, a wearable device, a base station, or other sensing devices, and acquires sensing data (for example, location data, temperature data, speed, human heart rate, blood pressure, or the like) by digitizing the physical environment information. Therefore, a sensing server is capable of providing corresponding services, such as positioning services, speed measurement services, health call services, or the like, based on the sensing data transmitted by the sensing device.

However, the sensing data is generally personal data or sensitive data, and thus there is no explicit solution to prevent leakage or theft of the sensing data.

**SUMMARY**

Embodiments of the present disclosure provide a method and apparatus for implementing security, a terminal device, and a network element.

According to a first aspect of the embodiments of the present disclosure, a method for implementing security is provided. The method is applicable to a terminal device, and includes:

receiving first request information, wherein the first request information is configured to request an authorization from the terminal device for transmission of sensing data, and the first request information includes an authorization certification for a first network element; and

authorizing the transmission of the sensing data in response to a successful verification on the authorization certification.

According to a second aspect of the embodiments of the present disclosure, a method for implementing security is provided. The method is applicable to a first network element, and includes:

transmitting first request information, wherein the first request information is configured to request an authorization from a terminal device for transmission of sensing data, and the first request information includes an authorization certification for the first network element, wherein the authorization certification is configured for the terminal device to verify an authorization of the first network element.

According to a third aspect of the embodiments of the present disclosure, a method for implementing security is provided. The method is applicable to a second network element, and includes:

receiving first request information from a first network element, wherein the first request information is configured to request an authorization from a terminal device for transmission of sensing data, and the first request information includes an authorization certification for the first network element; and

transmitting the first request information to the terminal device.

According to a fourth aspect of the embodiments of the present disclosure, an apparatus for implementing security is provided. The apparatus is applicable to a terminal device, and includes:

a first receiving unit, configured to receive first request information, wherein the first request information is configured to request an authorization from a terminal device for transmission of sensing data, and the first request information includes an authorization certification for a first network element; and
a first authorizing unit, configured to authorize the transmission of the sensing data, in response to a successful verification on the authorization certification.

According to a fifth aspect of the embodiments of the present disclosure, an apparatus for implementing security is provided. The apparatus is applicable to a first network element, and includes:
a second transmitting unit, configured to transmit first request information, wherein the first request information is configured to request an authorization from a terminal device for transmission of sensing data, and the first request information includes an authorization certification for the first network element, wherein the authorization certification is configured for the terminal device to verify an authorization of the first network element.

According to a sixth aspect of the embodiments of the present disclosure, an apparatus for implementing security is provided. The apparatus is applicable to a second network element, and includes:

a third receiving unit, configured to receive first request information from a first network element, wherein the first request information is configured to request an authorization from a terminal device for transmission of sensing data, and the first request information includes an authorization certification for the first network element; and
a third transmitting unit, configured to transmit the first request information to the terminal device.

According to a seventh aspect of the embodiments of the present disclosure, a terminal device is provided. The terminal device includes: a processor and a memory storing one or more computer programs, wherein the processor, when loading and running the one or more computer programs in the memory, is caused to perform the method for implementing security according to the first aspect.

According to an eighth aspect of the embodiments of the present disclosure, a first network element is provided. The first network element includes: a processor and a memory storing one or more computer programs, wherein the processor, when loading and running the one or more computer programs in the memory, is caused to perform the method for implementing security according to the second aspect.

According to a ninth aspect of the embodiments of the present disclosure, a second network element is provided. The second network element includes: a processor and a memory storing one or more computer programs, wherein the processor, when loading and running the one or more computer programs in the memory, is caused to perform the method for implementing security according to the third aspect. The chip according to the embodiments of the present disclosure is configured to perform the method for determining a transmit power as described above.

According to a tenth aspect of the embodiments of the present disclosure, a chip is provided. The chip is configured to perform the method for implementing security as described above.

The chip includes a processor, wherein the processor, when loading and running one or more computer programs in a memory, causes a device equipped with the chip to perform the method for implementing security as described above.

According to an eleventh aspect of the embodiments of the present disclosure, a computer-readable storage medium is provided. The computer-readable storage medium stores one or more computer programs, wherein the one or more computer programs, when loaded and run by a computer, cause the computer to perform the method for implementing security as described above.

According to a twelfth aspect of the embodiments of the present disclosure, a computer program product is provided. The computer program product includes one or more computer instructions, wherein the one or more computer instructions, when loaded and executed by a computer, cause the computer to perform the method for implementing security as described above.

According to a thirteenth aspect of the embodiments of the present disclosure, a computer program is provided. The computer program, when loaded and run by a computer, cause the computer to perform the method for implementing security as described above.

According to the method for implementing security in the embodiments of the present disclosure, the first network element on the network side requests the authorization from the terminal device for transmission of sensing data outside by transmitting the first request information. Correspondingly, the terminal device verifies the authorization certification carried in the first request information upon receiving the first request information, and authorizes the transmission of the sensing data in response to a successful verification on the authorization certification. Therefore, the network element on the network side requests the authorization from the terminal device for transmission of the sensing data, and the terminal device verifies the network element on the network side. That is, instead of the authorization direction that the network side authorizes the terminal side in a related art, the authorization direction is that the terminal side authorizes the network side in the present disclosure, such that the sensing data is ensured not to be revealed or stolen, and the security of transmitting the sensing data is improved.

**BRIEF DESCRIPTION OF DRAWINGS**

The accompanying drawings described herein are used to provide a further understanding of the present disclosure and form part of the present disclosure. The illustrative embodiments of the present disclosure and descriptions thereof are used to explain the present disclosure, and do not constitute limitations on the present disclosure.

FIG. 1 is a schematic diagram of a network architecture of a communication system according to some embodiments of the present disclosure;

FIG. 2 is a first schematic flowchart of a method for implementing security according to some embodiments of the present disclosure;

FIG. 3 is a second schematic flowchart of a method for implementing security according to some embodiments of the present disclosure;

FIG. 4 is a third schematic flowchart of a method for implementing security according to some embodiments of the present disclosure;

FIG. 5 is a fourth schematic flowchart of a method for implementing security according to some embodiments of the present disclosure;

FIG. 6 is a fifth schematic flowchart of a method for implementing security according to some embodiments of the present disclosure;

FIG. 7 is a schematic structural diagram of an apparatus 700 for implementing security according to some embodiments of the present disclosure;

FIG. 8 is a schematic structural diagram of an apparatus 800 for implementing security according to some embodiments of the present disclosure;

FIG. 9 is a schematic structural diagram of an apparatus 900 for implementing security according to some embodiments of the present disclosure;

FIG. 10 is a schematic structural diagram of a communication device according to some embodiments of the present disclosure;

FIG. 11 is a schematic structural diagram of a chip according to some embodiments of the present disclosure; and

FIG. 12 is a schematic block diagram of a communication system according to some embodiments of the present disclosure.

**DETAILED DESCRIPTION**

The technical solutions according to the embodiments of the present disclosure are described hereinafter in conjunction with the accompanying drawings for the embodiments of the present disclosure. It is clear that the described embodiments are a part of the embodiments of the present disclosure but not all of them. With respect to the embodiments in this disclosure, all other embodiments acquired by those skilled in the art without creative efforts shall fall within protection scope of the disclosure.

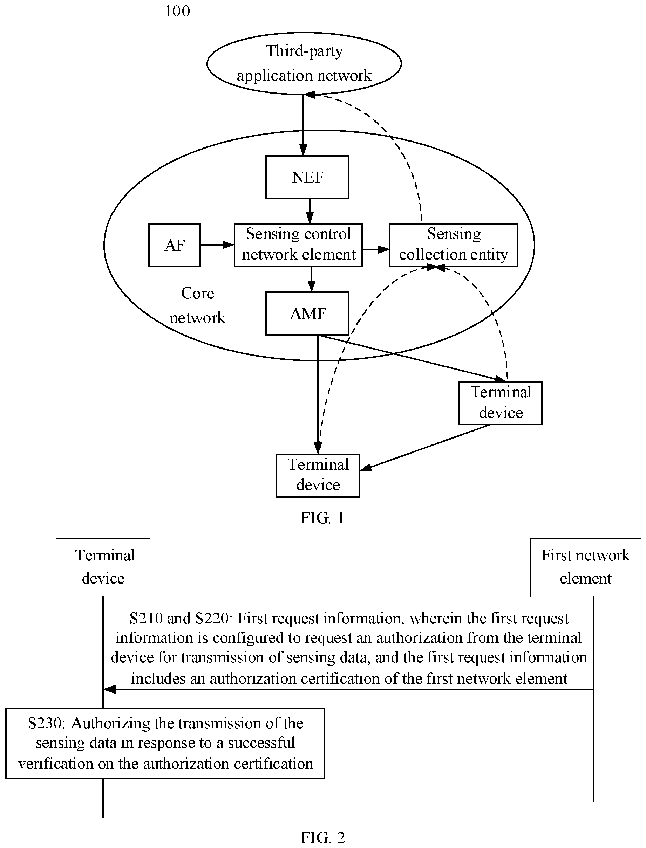

For ease of understanding, a network architecture to which the method for implementing security according to the embodiments of the present disclosure may be applied is introduced in combination with the related accompanying drawings. FIG. 1 is a schematic diagram of a network architecture of a communication system according to some embodiments of the present disclosure. As shown in FIG. 1, the communication system 100 includes a terminal device, an access network device, a core network, and a third-party application network. The terminal device accesses the core network over the access network device, and multi-service transmission is supported between the terminal device and the network device.

It is understandable that the embodiments of the present disclosure are illustrated using the communication system 100 as an example, but are not limited therein. That is, the technical solutions according to the embodiments of the present disclosure are applicable to various communication systems, for example, a long-term evolution (LTE) system, an LTE time division duplex (TDD) system, a universal mobile telecommunication system (UMTS), an Internet of things (IoT) system, a narrow band IoT (NB-IoT) system, an enhanced machine-type communications (eMTC) system, a 5th generation communication system (i.e., 5G communication system, also referred to as a new radio (NR) communication system), a 6th generation communication system (6G), or other further communication systems.

In the communication system 100 shown in FIG. 1, the access network device provides communication coverage for a specific geographic region, and the access network device is capable of communicating with a terminal device in the geographic region.

The access network device is an evolutional NodeB (eNB or eNodeB) in the LTE system, a gNB in the NR system, or a 6G base station, a next generation radio access network (NG RAN) device, a wireless controller in a cloud radio access network (CRAN). Alternatively, the network device 120 is a relay station, an access point, an in-vehicle device, a wearable device, a concentrator, a switch, a bridge, a router, a network device in a future evolved public land mobile network (PLMN), or the like.

The terminal device is any terminal device, and the terminal device includes, but is not limited to a terminal device connected to the network device or other terminal devices in a wired or wireless mode.

For example, the terminal device is an access device, a user equipment (UE), a subscriber unit, a subscriber station, a mobile terminal, a mobile station, a remote station, a remote terminal, a mobile equipment, a user terminal, a terminal, a wireless communication equipment, a user agent or user device, or the like. The access device is a cellular phone, a cordless phone, a Session Initiation Protocol (SIP) phone, an IoT device, a satellite hand-held terminal, a wireless local loop (WLL) station, a personal digital assistant (PDA) device, a hand-held device with the wireless communication function, a computing device or other processing devices connected to a wireless modem, an in-vehicle device, a wearable device, a drone, an autonomous vehicle (driverless car), a robot, a terminal device in the 5G network, a terminal device in the 6G network, a terminal device in a future evolved network, or the like.

The terminal device is also applicable to device-to-device communications.

The core network is used as a bearer network. The core network provides an interface to an external third-party application network, and provides communication connection, authentication, management, policy control, and bearing of data services for the terminal device. The core network is a 5G core network (5GC) or an evolved packet core network (EPC) of the LTE, which is not limited in the embodiments of the present disclosure.

Referring to FIG. 1, the core network may include the following network elements: an access and mobility management function (AMF), an authentication server function (AUSF), an application function (AF) network element, a network exposure function (NEF) network element, a sensing control network element, and a sensing collection network element. The core network 130 may further include other network elements not shown in FIG. 1, for example, a user plane function (UPF) network element, a session management function (SMF) network element, a unified data manager (UDM) network element, a network application function (NAF) network element, or the like.

The AMF is a control plane network element provided by an operator, and the AMF is configured for access control and mobility management of the terminal device to a network of the operator. The AMF is used as an end point of non-access stratum signaling, and the AMF processes network signaling. The AUSF is also a control plane network element provided by the operator for the authentication of the terminal device. The AF is configured to store service security requirements and provide policy determination information. The NEF is configured to advertise functions and events to other systems, and provide both openness and security. The sensing control network element is a control plane network elements provided by the operator to manage and control sensing services. The sensing collection entity is a user plane network element configured to collect sensing data from different devices and manage the sensing data.

It should be noted that in FIG. 1, solid arrows represent transmission directions of control messages, and dotted arrows represent transmission directions of IP routing data.

It is understandable that in the network evolving process, the above network elements in the core network may also be given other names, or a new network entity may be formed by categorizing functions of the core network, which are not limited in the embodiments of the present disclosure. The above network elements are deployed independently or in pairs, or a plurality of network elements are deployed in one entity. For example, the sensing control network element and the sensing collection entity are deployed in one entity, or the sensing control network element and the sensing collection entity are deployed in different entities, which is not limited in the embodiments of the present disclosure.

It should be noted that FIG. 1 only illustrates the system applied by the present disclosure, and the methods according to the embodiments of the present disclosure are also applicable to other systems. In addition, the terms "system" and "network" herein are interchangeably used in the present disclosure. The term "and/or" herein merely indicates an association relationship describing associated objects, that is, three types of relationships. For example, the phrase "A and/or B" indicates (A), (B), or (A and B). In addition, the character "/" generally indicates an "or" relationship between the associated objects. It is understandable that the term "indicate" in the embodiments of the present disclosure means a direct indication, an indirect indication, or an associated relationship. For example, A indicating B, which mean that A indicates B directly, e.g., B is acquired by A; or that A indicates B indirectly, e.g., A indicates C, wherein B is acquired by C; or that an association relationship is present between A and B. It is understandable that the term "corresponding" may indicate a direct corresponding relationship or indirect corresponding relationship between two objects, or indicate an association relationship between two objects, or indicate relationships such as indicating and being indicated, configuring and being configured, or the like. It is understandable that the "predefined" or "a predefined rule" is implemented by prestoring a corresponding code, a table, or another manner that may indicate related information in the device (for example, the terminal device or the network device), and the specific implementations are not limited in the present disclosure. For example, the "predefined" refers to defined in a protocol. It is understandable that the "protocol" indicates a standard protocol in the field of communications. For example, the protocols include the LTE protocol, the NR protocol, and related protocols applied to the future communication system, which are not limited in the present disclosure.

For ease of understanding of the technical solutions according to the embodiments of the present disclosure, the related technologies of the embodiments of the present disclosure are illustrated hereinafter. The following related technologies, as optional solutions, may be arbitrarily combined with the technical solutions according to the embodiments of the present disclosure, which fall within the protection scope of the embodiments of the present disclosure.

The integrated sensing and communication technology refers to a new information processing technology that achieves synergy of the communication function and the sensing function based on the software and hardware share or information share, and efficiently improves system spectrum efficiency, hardware efficiency, and information processing efficiency.

The base station and the terminal device in the future communication system tend to simultaneously have the communication function and the sensing function. The future terminal device is upgraded to an intelligent agent, and system capabilities of an autonomous vehicle (driverless car), a drone, a robot and other intelligent devices are increasingly increased. Within a short range, the intelligent agent needs to recognize poses, actions, and expressions of the human to enhance the human-machine interface performance, and needs to recognize action states between several intelligent agents to improve cooperative performance of the intelligent agent. At micro-distances, it is necessary to recognize target properties in the human body, products, and items to provide remote, AI-based and unmanned physical examinations, quality inspections and security inspection services.

As communication and sensing systems differ greatly in bandwidths, power output capacities, reception detection sensitivities, dynamic ranges of systems, duplex capabilities and duplex performance, and frequency offsets, phase noises, nonlinearities and other indicator requirements of radio frequency (RF) channels due to different requirements of system functions, specifications and the like, hardware designs of the conventional hardware architectures are respectively achieved based on requirements of communication and sensing. However, the integrated sensing and communication technology tends to simultaneously implement the sensing function and the communication function in the architecture and hardware system. Thus, the system needs to balance the requirements of communication and sensing during design of the system, add the feature requirements of shared spectrum resources, high dynamic range, full duplex and self-interference elimination, high channel performance, and other requirements, and further realize low realization complexity, low power consumption, and high integration. For example, integrated sensing and communication terminal devices share newly added spectrum resources in communicating and sensing.

Currently, the authorization mechanism in 5G security technology generally refers to that the service network authorizes the terminal device to allow the terminal device to access the network resources. A home network authorizes the service network to serve the terminal device. For example, in the registration process for the terminal device, the 5GC performs identity authentication and access authorization based on subscription configuration profiles in the UDM. It is understandable that the service network should authorize the terminal device by the subscription configuration profiles of the terminal device acquired from the home network. The authorization of terminal devices is achieved based on an authenticated subscription permanent identifier (SUPI). It is understandable that the current security technology can meet the access authentication problem of the terminal device in the 5G security technology, and define some key generation functions and processes.

In the integrated sensing and communication scenario in the future communication technologies, sensing data acquired on the terminal side is generally personal data or sensitive data, and it is necessary to prevent leakage and theft of the sensing data. However, the current security technology only authorizes the network resources, and the network side authorizes the terminal side. Therefore, requirements of authorizing the sensing data and authorizing the network side by the terminal side or the access side are not met.

To improve the security of the network, some embodiments of the present disclosure provide a method for implementing security. Referring to FIG. 2, the method includes, but is not limited to the following processes.

In S210, a first network element transmits first request information, wherein the first request information is configured to request an authorization from a terminal device for transmission of sensing data, and the first request information includes an authorization certification for the first network element.

In S220, the terminal device receives the first request information.

In S230, the terminal device authorizes the transmission of the sensing data in response to a successful verification on the authorization certification.

In the embodiments of the present disclosure, the first network element is a network element on the control plane provided by the operator, the first network element manages and controls sensing services, and manages a sensing server to ensure execution of the sensing services. In some embodiments, the first network element is a sensing control network element shown in FIG. 1. For example, the sensing control network element is a function entity independent of other network elements, or a network element in the related art. For example, the sensing control network is the AF or the NAF.

The sensing server may be a third-party application server providing the sensing services (for example, positioning, speed measurement, or health call services). The sensing server is also referred to as a use node of the sensing data.

In addition, in the embodiments of the present disclosure, the terminal device is a device supporting the integrated sensing and communication technology, and acquires the sensing data by detecting physical environment information. The sensing data is location data, temperature data, speed, human heart rate, blood pressure, and the like, which is not limited in the embodiments of the present disclosure. The terminal device in the embodiments of the present disclosure is also referred to as a provider of the sensing data.

In practice, the sensing server requests to acquire the sensing data to provide corresponding services. However, the sensing data is personal data or sensitive data, and the sensing data provider requires to verify requester to determine legitimacy of an identity the requestor and prevent leakage or theft of the sensing data.

For example, the sensing server requests an authorization from the terminal device for transmission of sensing data to the sensing server by transmitting a sensing service request to the first network element. Upon receiving the sensing service request, the first network element requests the authorization from the terminal device for the transmission of the sensing data by transmitting the first request information to a related terminal device.

In some embodiments, the first request information is directly transmitted from the first network element to the terminal device. It is understandable that the first network element can transmit the first request information to the terminal device over a communication interface between the first network element and the terminal device.

In some embodiments, the first request information is forwarded by a second network element trusted by the first network element to the terminal device. It is understandable that the first network element first transmits the first request information to the second network element, and the second network element forwards the first request information to the terminal device. The second network element is a network element on the control plane different from the first network element. For example, the second network element is the AMF or the AUSF, which is not limited in the embodiments of the present disclosure.

It should be noted that the first network element provides the control and management for the sensing data between the sensing server and the terminal device, and authenticates and manages the sensing server in advance. That is, communications between the first network element and the sensing server are trusted. As transmission between the terminal device and the first network element is prone to being tampered or stolen by the attackers, the first network element carries the authorization certification in the first request information, such that the terminal device verifies the identity of the first network element.

In the embodiments of the present disclosure, the terminal device receives the first request information, and verifies, based on the authorization certification carried in the first request information, whether the first request information is from the first network element and whether to authorize a sensing service type requested by the first request information. In response to a failed verification on the authorization certification, the first request information is not from the first network element, or the terminal device does not support the sensing service type requested by the first request information, and the corresponding terminal device ignores the first request information. In response to a successful verification on the authorization certification, the first request information is from the trusted first network element, and the terminal device supports the sensing service type requested by the first request information, and the corresponding terminal device authorizes the transmission of the sensing data based on the first request information.

In some embodiments, upon authorizing the transmission of the sensing data, the terminal device transmits the acquired sensing data to a third network element, and transmits the sensing data to the sensing server over the third network element. In some embodiments, the third network element is the sensing collection entity shown in FIG. 1. The third network element may be other network elements, which is not limited in the embodiments of the present disclosure.

In summary, according to the method for implementing security in the embodiments of the present disclosure, the first network element on the network side transmits the first request information to request an authorization from the terminal device for the transmission of sensing data outside. Correspondingly, the terminal device verifies the authorization certification in the first request information upon receiving the first request information, and authorizes the transmission of the sensing data in response to a successful verification on the authorization certification. Therefore, the network element on the network side requests an authorized transmission of the sensing data from the terminal device, and the terminal device verifies the network element on the network side. That is, instead of the authorization direction that the network side authorizes the terminal side in a related art, the authorization direction is that the terminal side authorizes the network side in the present disclosure, such that the sensing data is ensured not to be revealed or stolen.

The generation and verification processes of the authorization certification are described in detail hereinafter.

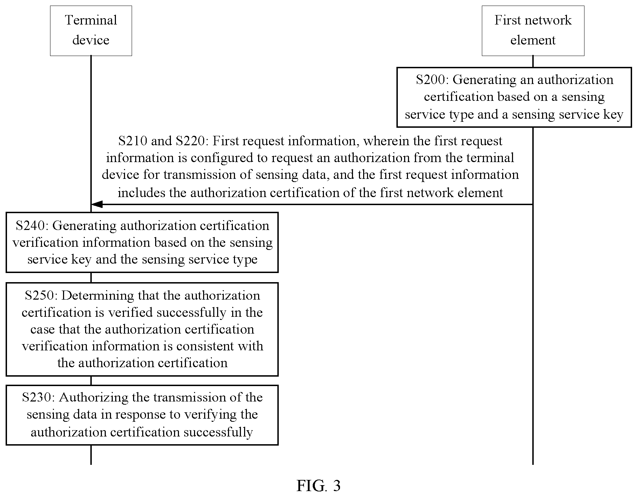

In some embodiments, referring to FIG. 3, prior to S210 in which the first network element transmits the first request information, the first network element performs the following processes.

In S200, a first network element generates authorization certification based on a sensing service type and a sensing service key.

The sensing service type is a type of a sensing service offerable by the sensing server. For example, the sensing service type is positioning, speed measurement, or other types, which is not limited in the embodiments of the present disclosure.

In addition, a sensing service key is a key dedicated to the sensing service. The sensing service key in S200 is acquired by the first network element prior to S200.

In the embodiments of the present disclosure, the sensing service key in S200 is generated by the first network element, or acquired by the first network element from other trusted network elements on the control plane (for example, the second network element), which is not limited in the embodiments of the present disclosure. For example, the sensing service key in S200 is generated by the first network element based on a key shared by the first network element and the terminal device. Alternatively, the sensing service key in S200 is generated by the second network element and fed back to the first network element upon the first network element transmitting a key request to the trusted second network element.

In some embodiments, the first network element generates the authorization certification by calculating the sensing service type and the sensing service key using a message authentication function f1 or f2. For example, the first network element generates the authorization certification according to the following formula (1):

$$\text{Token\_Service Type} = \text{f2Ka\_ST (Service Type)} \qquad (1).$$

Token_Service Type represents the authorization certification, f2 represents the message authentication function, and Ka_ST represents the sensing service key.

In some embodiments, in addition to the above sensing service type and sensing service key, the first network element generates the above authorization certification by adding other parameters, for example, an identifier of the first network element, an identifier of the terminal device, a random number (NONCE), a count value (COUNT) (including a key counter value, or a message counter value), or the like, which is not limited in the embodiments of the present disclosure.

In some embodiments, the first network element generates the authorization certification Token_Service Type according to any one of the following formulas (1-1) to (1-5).

$$\text{Token\_Service Type} = \text{f2Ka\_ST(Service Type} \mathbin{\|} \text{ID)} \qquad (1\text{-}1);$$

$$\text{Token\_Service Type} = \text{f2Ka\_ST(Service Type} \mathbin{\|} \text{ID} \mathbin{\|} \text{NONCE)} \qquad (1\text{-}2);$$

$$\text{Token\_Service Type} = \text{f2Ka\_ST(Service Type} \mathbin{\|} \text{ID} \mathbin{\|} \text{COUNT)} \qquad (1\text{-}3);$$

$$\text{Token\_Service Type} = \text{f2Ka\_ST(Service Type} \mathbin{\|} \text{NONCE)} \qquad (1\text{-}4);$$

$$\text{Token\_Service Type} = \text{f2Ka\_ST(Service Type} \mathbin{\|} \text{COUNT)} \qquad (1\text{-}5).$$

ID represents the identifier of the first network element and/or the identifier of the terminal device, NONCE represents the nonce, COUNT represents the count, that is, the key counter value and/or the message counter value.

It is understandable that upon generating the authorization certification, the first network element transmits the authorization certification by carrying the authorization certification in the first request information.

In some embodiments, in the case that the first network element transmits the first request information to the terminal device directly, the first network element performs integrity protection and/or encryption on the first request information using the sensing service key Ka_ST to prevent leakage or theft of information contents by third-party.

In some embodiments, in the case that the first network element transmits the first request information to the terminal device over the second network element, as both the first network element and the second network element are network elements on the control plane provided by the operator, security and protection of data transmission between the first network element and the second network element are ensured, and the data is not tampered or stolen by the attacker. Thus, the sensing service key Ka_ST is not used for integrity protection and/or encryption of the first request information in the transmission between the first network element and the second network element.

In some embodiments, the first request information transmitted by the first network element further carries the sensing service type.

Correspondingly, referring to FIG. 3, in the method for implementing security according to the embodiments of the present disclosure, S240 and S250 are performed prior to S230.

In S240, the terminal device generates verification information based on the sensing service key and the sensing service type.

In S250, the terminal device determines that the authorization certification is verified successfully in the case that the verification information is consistent with the authorization certification.

In the embodiments of the present disclosure, upon receiving the first request information, the terminal device acquires the sensing service type carried in the first request information, and then generates the verification information based on the acquired sensing service type and a pre-generated sensing service key.

In some embodiments, in addition to the sensing service type and the sensing service key, the terminal device generates the verification information by adding other parameters, for example, an identifier of the first network element, an identifier of the terminal device, the nonce, the count (including the key counter value, or the message counter value), or the like, which is not limited in the embodiments of the present disclosure.

In some embodiments, the sensing service key in S240 is generated by the terminal device prior to S240. For example, the sensing service key in S240 is generated by the terminal device in advance based on the key shared by the terminal device and the first network element.

In some embodiments, the method of generating the verification information by the terminal device based on the sensing service key and the sensing service type is the same as the method of generating the authorization certification by the first network element. That is, the terminal device generates the verification information by calculating the sensing service type and the sensing service key using the message authentication function f1 or f2. For example, the terminal device generates the verification information by any of the above formula (1), or formulas (1-1) to (1-5).

Furthermore, upon generating the verification information, the terminal device determines whether the authorization certification in the first request information is consistent with the generated verification information. In the case that the authorization certification in the first request information is consistent with the generated verification information, the terminal device determines that the authorization certification is verified successfully. In the case that the authorization certification in the first request information is not consistent with the generated verification information, the terminal device determines a failure of the verification of the authorization certification, and thus does not respond to the first request information.

In some embodiments, upon receiving the first request information, the terminal device first determines whether to support the sensing service type carried in the first request information. In the case that the terminal device supports the sensing service type carried in the first request information, the terminal device performs the process for verifying the authorization certification in S240 and S250. Otherwise, the terminal device ignores the first request information.

In some embodiments, in the case that the terminal device verifies the authorization certification in the first request information successfully, the terminal device authorizes transmission of the sensing data matched with the sensing service type in the first request information to the third network element. In this way, upon acquiring the sensing data matched with the sensing service type, the terminal device transmits the acquired sensing data to the third network element.

It is understandable that different sensing data correspond to different sensing services, and the third network element uploads the sensing data to a sensing server corresponding to the sensing data upon receiving the sensing data.

It should be noted that the first network element and the third network element are two different entities, or the first network element and the third network element are combined, which is not limited in the embodiments of the present disclosure.

In some embodiments, the terminal device performs the integrity protection and/or encryption on the sensing data based on the sensing service key, and then transmits the sensing data to the third network element.

In some embodiments, in the case that the first network element and the third network element are two different entities, the first network element pre-transmits the sensing service key to the third network element, such that the third network element is capability of decrypting the received sensing data.

In some embodiments, in the case that the third network element is the UPF, the terminal device does not use the sensing service key but uses an existing method to perform the integrity protection and/or encryption on the sensing data to achieve security protection, which is not limited in the embodiments of the present disclosure.

In some embodiments of the present disclosure, the sensing service key is generated based on a first key, wherein the first key is the key shared by the terminal device and the first network element. For example, the first key is any one of: a NAF key Ks_NAF, an AF key $K_{AF}$, an AMF key $K_{AMF}$, or a SEAF key $K_{SEAF}$. The type of the first key is not limited in the embodiments of the present disclosure.

It is understandable that the first key is the key shared by the first network element and the terminal device, and the first key may be only possessed by the first network element and the terminal device. A third-party attacker cannot acquire the first key, and thus cannot generate the sensing service key based on the first key. In this way, the confidentiality and security of the sensing service key are ensured.

In the embodiments of the present disclosure, a plurality of methods of determining the sensing service key Ka_ST by the first network element and the terminal device can be utilized, and three methods are described in detail hereinafter.

Method 1

In some embodiments, in the case that the security management is achieved using a generic bootstrapping architecture (GBA), the first network element is the NAF in the GBA, the second network element is the AMF or the AUSF, and correspondingly, the first key is the NAF key Ks_NAF.

In the GBA scenario, both the first network element and the terminal device generate the sensing service key Ka_ST based on the key Ks_NAF, the sensing service type, and first network parameters. The first network parameters include the nonce and/or the count.

For example, the first network element acquires the sensing service key Ka_ST according to the following formula (2):

$$Ka\_ST = KDF(Ks\_NAF, S) \qquad (2).$$

KDF represents a key derivation function, and S includes a parameter P0 and a parameter P1. The parameter P0 represents the sensing service type, and the parameter P1 represents the nonce and/or the count.

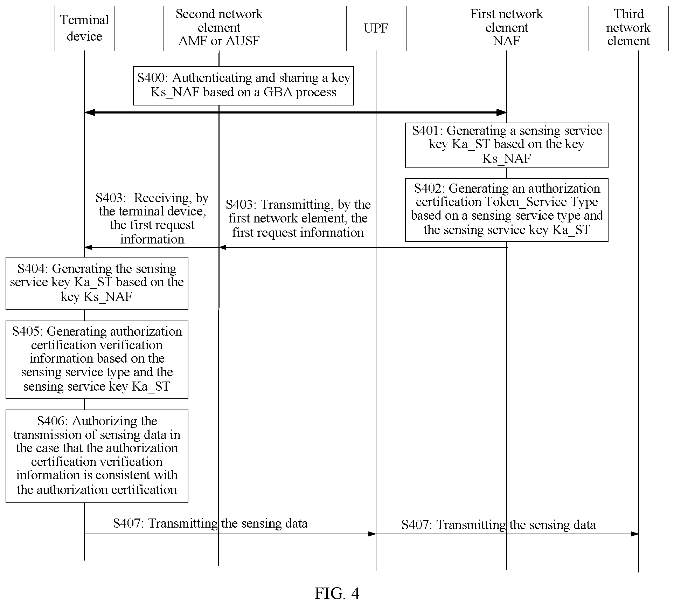

In some embodiments, referring to the schematic flowchart shown in FIG. 4, in the GBA scenario, the method for implementing security according to the embodiments of the present disclosure is performed based on the following processes.

In S400, the terminal device and the first network element (the NAF) authenticate and share the key Ks_NAF based on the GBA process.

It is understandable that bi-directional authentication of the terminal device and the NAF is achieved based on the GBA process, and the key Ks_NAF is acquired based on negotiation of the terminal device and the NAF. With respect to details of the authentication of the terminal device and the NAF, reference is made to the GBA process in the related art, which are not described in the embodiments of the present disclosure.

In S401, the first network element generates the sensing service key Ka_ST based on the key Ks_NAF.

In some embodiments, the first network element derives the sensing service key Ka_ST based on the key Ks NAF, the sensing service type, and the first network parameters. For example, the first network element derives the sensing service key Ka_ST according to the above formula (2).

In S402, the first network element generates the authorization certification Token_Service Type based on the sensing service type and the sensing service key Ka_ST.

In some embodiments, the first network element acquires the authorization certification Token_Service Type according to any of the above formula (1), or formulas (1-1) to (1-5).

In S403, the first network element transmits the first request information, and the terminal device receives the first request information.

The first request information carries the authorization certification Token_Service Type.

In some embodiments, the first request information further carries the sensing service type and the first network parameters. The first network parameters include the nonce and/or the count.

In some embodiments, the first network element directly transmits the first request information to the terminal device, or transmits the first request information to the terminal device over the second network element (the AMF or the AUSF).

In some embodiments, in the case that the first network element directly transmits the first request information to the terminal device, the first network element performs the integrity protection and/or encryption on the first request information based on the sensing service key Ka_ST to prevent leakage or theft of the information contents by third-party.

It is understandable that since the first network element is a network device compliant with the 3rd generation partnership project (3GPP), security of information transmitted by the first network element to the second network element or information transmitted by the second network element to the terminal device is ensured. Thus, the security of the first request information is ensured, and the first request information is not tampered or stolen by the attacker.

In some embodiments, upon receiving the first request information, the terminal device first determines whether the terminal device supports the sensing service type carried in the first request information. In the case that the terminal device supports the sensing service type, S404 is performed. In the case that the terminal device does not support the sensing service type carried in the first request information, the terminal device ignores the first request information, and exits the process for implementing security.

In S404, the terminal device generates the sensing service key Ka_ST based on the key Ks_NAF.

On the terminal side, the terminal device generates the sensing service key Ka_ST by using the method that is used in S401. In some embodiments, the terminal device derives the sensing service key Ka_ST based on the key Ks NAF, the sensing service type, and the first network parameters. For example, the terminal device derives the sensing service key Ka_ST according to the formula (2).

It is understandable that the key Ks NAF is only possessed by the terminal device and the first network element, and thus the third-party attacker cannot acquire the key Ks NAF, and cannot generate the sensing service key Ka_ST, such that the confidentiality of the key Ka_ST is ensured.

In some embodiments, in the case that the integrity protection and/or encryption of the first request information is performed based on the sensing service key Ka_ST, upon receiving the first request information, the terminal device generates the sensing service key Ka_ST based on the key Ks_NAF, and decrypts and performs integrity verification on the first request information using the sensing service key Ka_ST.

In S405, the terminal device generates verification information based on the sensing service key Ka_ST and the sensing service type.

It is understandable that upon generating the sensing service key Ka_ST, the terminal device may generate the verification information based on the generated sensing service key Ka_ST and the sensing service type acquired from the first request information.

The method for generating the verification information by the terminal device is the same as the method for generating the authorization certification by the first network element in S402, which is not repeated herein for brevity.

In S406, the terminal device authorizes the transmission of the sensing data in the case that the verification information is consistent with the authorization certification.

It is understandable that the terminal device may determine whether the generated verification information is consistent with the received authorization certification Token_Service Type. In the case that the generated verification information is consistent with the received authorization certification Token_Service Type, the terminal device determines that the first request information is transmitted by the trusted first network element and the terminal device supports the sensing service type requested by the first request information, and performs the authorization.

In S407, the terminal device transmits the sensing data.

The terminal device may transmit the sensing data to the third network element (that is, the sensing collection entity), such that the third network element can transmit sensing data of different sensing service types to the sensing servers corresponding to the sensing data.

In some embodiments, the terminal device performs the integrity protection and/or encryption on the sensing data using the sensing service key Ka_ST.

In some embodiments, the third network element acquires the sensing service key Ka_ST from the first network element to perform decryption and integrity verification on the sensing data from the terminal device.

In some embodiments, in the case that the terminal device forwards the sensing data to the third network element over the UPF, the terminal device protects the sensing data using the existing technologies.

Method 2

In some embodiments, in the case that the security management is achieved by using an authentication and key management for applications (AKMA) architecture, the first network element is the AF in the AKMA architecture, the second network element is the AMF or the AUSF, and correspondingly, the first key is the AF key $K_{AF}$.

In the AKMA scenario, both the first network element and the terminal device generates the sensing service key Ka_ST based on the key $K_{AF}$, the sensing service type, AKMA key identification information, and second network parameters. The second network parameters include the nonce and/or the count.

For example, the first network element acquires the sensing service key Ka_ST according to the following formula (3):

$$\text{Ka\_ST} = \text{KDF}(K_{AF}, S) \qquad (3).$$

KDF represents a key derivation function, and S includes a parameter P0, a parameter P1, and a parameter P2. The parameter P0 represents the sensing service type, the parameter P1 represents the nonce and/or the count, and the parameter P2 represents the AKMA key identification information.

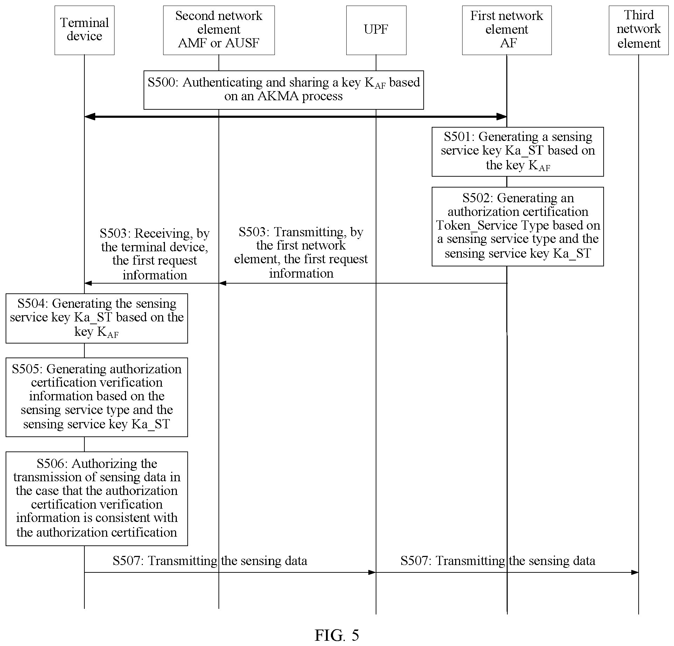

In some embodiments, referring to the schematic flowchart shown in FIG. 5, in the AKMA scenario, the method for implementing security according to the embodiments of the present disclosure is performed based on the following processes.

In S500, the terminal device and the first network element (that is, the AF) authenticate and share the key $K_{AF}$ based on the AKMA process.

It is understandable that bi-directional authentication of the terminal device and the first network element is achieved based on the AKMA process, and the key $K_{AF}$ is acquired based on negotiation between the terminal device and the first network element. With respect to details of authentication of the terminal device and the first network element (the AF), reference is made to the AKMA process in the related art, which is not repeated in the embodiments of the present disclosure.

In S501, the first network element generates the sensing service key Ka_ST based on the key $K_{AF}$.

In some embodiments, the first network element derives the sensing service key Ka_ST based on the key $K_{AF}$, the sensing service type, the AKMA key identification information, and the second network parameters. For example, the first network element derives the sensing service key Ka_ST according to the above formula (3).

In S502, the first network element generates the authorization certification Token_Service Type based on the sensing service type and the sensing service key Ka_ST.

In some embodiments, the first network element derives the authorization certification Token_Service Type according to any of the above formula (1), or formulas (1-1) to (1-5).

In S503, the first network element transmits the first request information, and the terminal device receives the first request information.

The first request information carries the authorization certification Token_Service Type.

In some embodiments, the first request information further carries the sensing service type and the second network parameters. The second network parameters include the nonce and/or the count.

In some embodiments, the first network element directly transmits the first request information to the terminal device, or transmits the first request information to the terminal device over the second network element (that is, the AMF or the AUSF).

In some embodiments, in the case that the first network element directly transmits the first request information to the terminal device, the first network element performs the integrity protection and/or encryption on the first request information based on the sensing service key Ka_ST to prevent leakage or theft of the information contents by third-party.

It is understandable that as the first network element is a 3GPP network device, security and protection of information from the first network element to the AMF or the AUSF or information from the AMF or the AUSF to the terminal device are ensured. Thus, the security and protection of the first request information are ensured, and the first request information is not tampered or stolen by the attacker.

In some embodiments, upon receiving the first request information, the terminal device first determines that whether the terminal device supports the sensing service type carried in the first request information. In the case that the terminal device supports the sensing service type carried in the first request information, S504 is performed. In the case that the terminal device does not support the sensing service type carried in the first request information, the terminal device ignores the first request information, and exits the process for implementing security.

In S504, the terminal device generates the sensing service key Ka_ST based on the key $K_{AF}$.

On the terminal side, the terminal device generates the sensing service key Ka_ST by using the method same as S501. In some embodiments, the terminal device derives the sensing service key Ka_ST based on the key $K_{AF}$, the sensing service type, the AKMA key identification information, and the second network parameters. For example, the terminal device derives the sensing service key Ka_ST according to the formula (3).

It is understandable that the key $K_{AF}$ is only possessed by the terminal device and the first network element, and thus the third-party attacker cannot acquire the key $K_{AF}$, and cannot generate the sensing service key Ka_ST based on the key $K_{AF}$, such that the confidentiality of the key Ka_ST is ensured.

In some embodiments, in the case that the integrity protection and/or encryption of the first request information is based on the sensing service key Ka_ST, the terminal device generates the sensing service key Ka_ST based on the key $K_{AF}$ upon receiving the first request information, and performs decryption and integrity verification on the first request information using the sensing service key Ka_ST.

In S505, the terminal device generates verification information based on the sensing service key Ka_ST and the sensing service type.

It is understandable that upon generating the sensing service key Ka_ST, the terminal device can generate the verification information based on the generated sensing service key Ka_ST and the sensing service type acquired from the first request information.

The method of generating the verification information by the terminal device is the same as the method of generating the authorization certification by the first network element in S502, which is not repeated herein for brevity.

In S506, the terminal device authorizes the transmission of the sensing data in the case that the verification information is consistent with the authorization certification.

It is understandable that the terminal device can determine that whether the generated verification information is consistent with the received authorization certification Token_Service Type. In the case that the generated verification information is consistent with the received authorization certification Token_Service Type, the terminal device determines that the first request information is from the trusted first network element and the terminal device supports the sensing service type requested by the first request information, and performs the authorization.

In S507, the terminal device transmits the sensing data.

The terminal device may transmit the sensing data to the third network element (that is, the sensing collection entity), such that the third network element can transmit sensing data of different sensing service types to the sensing servers corresponding to the sensing data.

In some embodiments, the terminal device performs the integrity protection and/or encryption on the sensing data using the sensing service key Ka_ST.

In some embodiments, the third network element acquires the sensing service key Ka_ST from the first network element to perform decryption and integrity verification on the sensing data from the terminal device.

In some embodiments, in the case that the terminal device forwards the sensing data to the third network element over the UPF, the terminal device protects the sensing data using the existing technologies.

Method 3

In some embodiments, in the case that an authentication and key agreement (AKA) architecture or an extensible authentication protocol-authentication and key agreement (EAP-AKA) architecture is used, the first network element is a sensing control network element, the second network element is the AMF or the AUSF, and correspondingly, the first key is the key $K_{AMF}$ or the key $K_{SEAF}$.

In some embodiments, in the case that the first key is the key $K_{AMF}$, the terminal device generates the sensing service key Ka_ST based on the key $K_{AMF}$, the sensing service type, and third network parameters. The third network parameters include the nonce and/or the count. For example, the terminal device acquires the sensing service key Ka_ST according to the following formula (4):

$$Ka\_ST = KDF(K_{AMF}, S) \qquad (4).$$

KDF represents a key derivation function, and S includes a parameter P0 and a parameter P1. The parameter P0 represents the sensing service type, and the parameter P1 represents the nonce and/or the count.

In some embodiments, the process for generating the sensing service key Ka_ST based on the key $K_{AMF}$, the sensing service type, and the third network parameters by the terminal device is performed by the following processes.

The terminal device first generates a first immediate key $K_{AMF}'$ based on the key $K_{AMF}$, and then generates the sensing service key Ka_ST based on the first immediate key $K_{AMF}'$, the sensing service type, and the third network parameters. For example, the terminal device generates the first immediate key $K_{AMF}'$ based on the key $K_{AMF}$ according to the following formula (5):

$$K_{AMF}' = KDF(K_{AMF}, S) \qquad (5).$$

S includes a parameter P0 and a parameter P1. The parameter P0 represents the AMF identification information, and the parameter P1 represents the nonce and/or the count. In addition, with respect to the process for generating the sensing service key Ka_ST based on the first immediate key $K_{AMF}'$, the sensing service type, and the third network parameters by the terminal device, reference is made to the formula (4), which is not repeated herein for brevity.

In some embodiments, in the case that the first key is the key $K_{SEAF}$, the terminal device generates the sensing service key Ka_ST based on the key $K_{SEAF}$, the sensing service type, and the third network parameters. For example, the terminal device acquires the sensing service key Ka_ST according to the following formula (6):

$$Ka\_ST = KDF(K_{SEAF}, S) \qquad (6).$$

S includes a parameter P0 and a parameter P1. The parameter P0 represents the sensing service type, and the parameter P1 represents the nonce and/or the count.

In some embodiments, the process for generating the sensing service key Ka_ST based on the key $K_{SEAF}$, the sensing service type, and the third network parameters by the terminal device is performed by the following processes.

The terminal device first generates a second immediate key $K_{SEAF}'$ based on the key $K_{SEAF}$, and then generates the sensing service key Ka_ST based on the second immediate key $K_{SEAF}'$, the sensing service type, and the third network parameters. For example, the terminal device generates the second immediate key $K_{SEAF}'$ based on the key $K_{SEAF}$ according to the following formula (7):

$$K_{SEAF}' = KDF(K_{SEAF}, S) \qquad (7).$$

S includes a parameter P0 and a parameter P1. The parameter P0 represents the AMF identification information, and the parameter P1 represents the nonce and/or the count. In addition, with respect to the process for generating the sensing service key Ka_ST based on the first immediate key $K_{AMF}'$, the sensing service type, and the third network parameters by the terminal device, reference is made to the formula (6), which is not repeated herein for brevity.

The above descriptions are the process for generating the sensing service key Ka_ST by the terminal device in the AKA/EAP-AKA scenario, and the process for acquiring the sensing service key Ka_ST by the first network element in the AKA/EAP-AKA scenario is described hereinafter.

In the AKA/EAP-AKA scenario, the first network element is a network element dedicate to sense service processing, and the first network element may not store the key shared by the first network element and the terminal device. On this basis, in the case that the first network element receives the sensing service request from the sensing server, the first network element requests the second network element (the AMF or the AUSF) to generate and feed back the sensing service key Ka_ST by transmitting second request information to the second network element.

In some embodiments, the method of generating the sensing service key Ka_ST by the second network element is the same as the method of generating the sensing service key Ka_ST by the terminal device in the AKA/EAP-AKA scenario, which is not repeated herein.

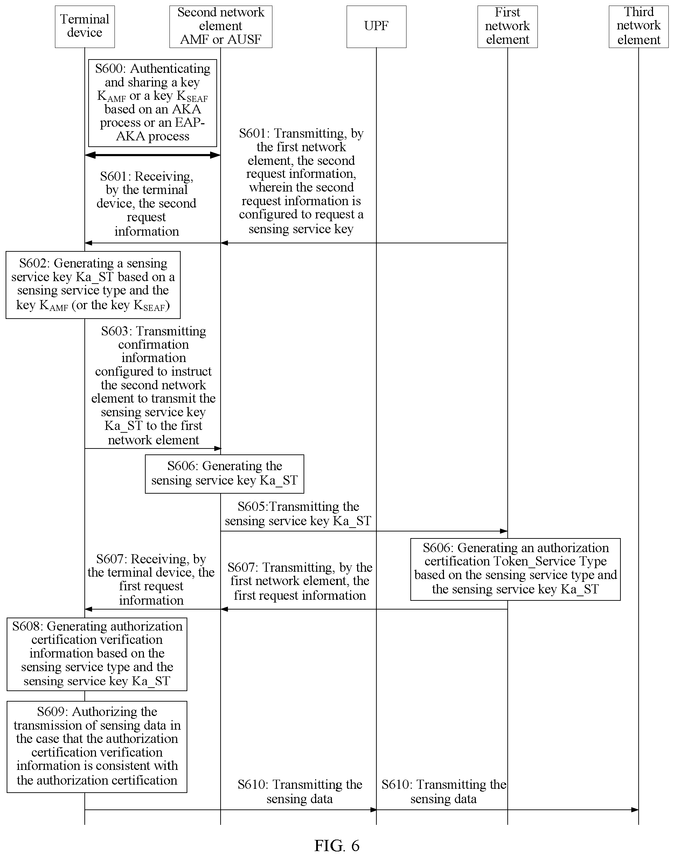

For example, referring to the schematic flowchart shown in FIG. 6, in the AKA or EAP-AKA scenario, the method for implementing security according to the embodiments of the present disclosure is performed by the following processes.

In S600, the terminal device and the second network element (the AMF or the AUSF) authenticate and share the key $K_{AMF}$ or the key $K_{SEAF}$ based on the AKA process or the EAP-AKA process.

It is understandable that bi-directional authentication of the terminal device and the second network element is achieved based on the AKA process or the EAP-AKA process, and the key AKA or the key EAP-AKA is acquired based on negotiation of the terminal device and the second network element. With respect to details of authentication of the terminal device and the second network element, reference is made to the AKA process or the EAP-AKA process in the related art, which are not repeated in the embodiments of the present disclosure.

In S601, the first network element transmits second request information to the second network element, and the second network element transmits the second request information to the terminal device, wherein the second request information is configured to request the sensing service key.

It is understandable that the first network element does not store the key $K_{AMF}$ or the key $K_{SEAF}$, and thus the first network element transmits a request for the sensing service key to the second network element storing the key $K_{AMF}$ or the key $K_{SEAF}$ upon receiving the sensing service request from the sensing server.

The second network element can forward the second request information to the terminal device upon receiving the second request information, such that the terminal device can determine that whether the terminal device supports the sensing service carried in the request and then determine that whether to allow the second network element to provide the sensing service key to the first network element.

In some embodiments, the second request information carries the sensing service type.

In some embodiments, upon receiving the second request information, the terminal device first determines that whether the terminal device supports the sensing service type carried in the second request information. In the case that the terminal device supports the sensing service type, S602 is performed. In the case that the terminal device does not support the sensing service type, the terminal device ignores the second request information.

In S602, the terminal device generates the sensing service key Ka_ST based on the sensing service type and the key $K_{AMF}$ (or the key $K_{SEAF}$).

In some embodiments, in the case that the second network element is the AMF, the terminal device generates the sensing service key Ka_ST based on the key $K_{AMF}$, the sensing service type, and the third network parameters. That is, the terminal device derives the sensing service key Ka_ST according to the above formula (4). In some other embodiments, in the case that the second network element is the AMF, the terminal device first generates the first immediate key $K_{AMF}'$ based on the key $K_{AMF}$, and then generates the sensing service key Ka_ST based on the first immediate key $K_{AMF}'$, the sensing service type, and the third network parameters. That is, the terminal device derives the sensing service key Ka_ST in conjunction with the above formulas (4) and (5).

In some embodiments, in the case that the second network element is the AUSF, the terminal device generates the sensing service key Ka_ST based on the key $K_{SEAF}$, the sensing service type, and the third network parameters. That is, the terminal device derives the sensing service key Ka_ST according to the above formula (6). In some other embodiments, in the case that the second network element is the AUSF, the terminal device first generates the second immediate key $K_{SEAF}'$ based on the key $K_{SEAF}$, and then generates the sensing service key Ka_ST based on the second immediate key $K_{SEAF}'$, the sensing service type, and the third network parameters. That is, the terminal device derives the sensing service key Ka_ST in conjunction with the above formulas (6) and (7).

In some embodiments, the terminal device generates a verification parameter Res_ST in the case that the terminal device generates the sensing service key Ka_ST, wherein the verification parameter is configured for the second network element to verify the sensing service type.

In some embodiments, the terminal device generates the verification parameter Res_ST based on the message authentication function f1 or f2. For example, the terminal device calculates the verification parameter Res_ST according to the following formula (8):

$$\text{Res\_ST} = \text{f2Ka\_ST(Service Type, COUNT\_K)} \qquad (8).$$

COUNT_K is a count corresponding to the sensing service key Ka_ST, that is, the key counter value. The COUNT_K is determined in the case that the terminal device generates the sensing service key Ka_ST.

In S603, the terminal device transmits confirmation information to the second network element, wherein the confirmation information is configured to instruct the second network element to transmit the sensing service key to the first network element.

In some embodiments, the confirmation information includes at least one of: the verification parameter Res_ST, the COUNT_K, or the sensing service type.

In some embodiments, the second network element generates verification parameter verification information upon receiving the confirmation information. For example, the second network element generates the verification parameter verification information by the method of generating the verification parameter Res_ST by the terminal device. That is, the second network element generates the verification parameter verification information according to the formula (8).

In the embodiments of the present disclosure, in the case that the verification parameter verification information generated by the second network element is consistent with the verification parameter in the confirmation information, the second network element determines that the sensing service type is correct, and performs S704. Otherwise, the second network element ignores the confirmation information, and exits the process for implementing security.

In S604, the second network element generates the sensing service key Ka_ST.

The method of generating the sensing service key Ka_ST by the second network element is the same as the method of generating the sensing service key Ka_ST by the terminal device, which is not repeated herein.

In S605, the second network element transmits the sensing service key Ka_ST to the first network element.

In S606, the first network element generates the authorization certification Token_Service Type based on the sensing service type and the sensing service key Ka_ST.

In some embodiments, the first network element derives the authorization certification Token_Service Type according to any of the above formula (1), or formulas (1-1) to (1-5).

In S607, the first network element transmits the first request information, and the terminal device receives the first request information.

The first request information carries the authorization certification Token_Service Type.

In some embodiments, the first request information further carries the sensing service type.

In some embodiments, the first network element directly transmits the first request information to the terminal device, or transmits the first request information to the terminal device over the second network element.

In some embodiments, in the case that the first network element directly transmits the first request information to the terminal device, the first network element performs the integrity protection and/or encryption on the first request information using the sensing service key Ka_ST to prevent leakage or theft of the information contents by third-party.

In S608, the terminal device generates the verification information based on the sensing service key Ka_ST and the sensing service type.

It is understandable that upon generating the sensing service key Ka_ST, the terminal device generates the verification information based on the sensing service key Ka_ST and the sensing service type acquired from the first request information.

The method of generating the verification information by the terminal device is the same as the method of generating the authorization certification by the first network element in S606, which is not repeated herein.

In S609, the terminal device authorizes the transmission of the sensing data in the case that the verification information is consistent with the authorization certification.

It is understandable that the terminal device determines whether the generated verification information is consistent with the received authorization certification Token_Service Type. In the case that the generated verification information is consistent with the received authorization certification Token_Service Type, the terminal device determines that the first request information is from the trusted first network element and the terminal device supports the sensing service type requested by the first request information, and performs the authorization.

In S610, the terminal device transmits the sensing data.

The terminal device may transmit the sensing data to the third network element (that is, the sensing collection entity), such that the third network element can transmit sensing data of different sensing service types to the sensing servers corresponding to the sensing data.

In some embodiments, the terminal device performs the integrity protection and/or encryption on the sensing data using the sensing service key Ka_ST.

In some embodiments, the third network element acquires the sensing service key Ka_ST from the first network element to perform the decryption and integrity verification on the sensing data from the terminal device.

In some embodiments, in the case that the terminal device forwards the sensing data to the third network element over the UPF, the terminal device protects the sensing data using the existing technologies.

Some embodiments of the present disclosure are described in detail hereinabove in conjunction with the accompany drawings. However, the present disclosure is not limited to specific details in the above embodiments. A variety of simple variations within the scope of the technical concept of the present disclosure may be made on the technical solutions according to the present disclosure, and the simple variations are within the protection scope of the present disclosure. For example, the specific technical features described in the above specific embodiments may be combined in any suitable way without contradiction, and various possible combinations are not described in the present disclosure to avoid unnecessary repetition. For example, different embodiments of the present disclosure may also be combined arbitrarily, as long as the idea of the present disclosure is not contradicted, which shall also be regarded as the content disclosed in the present disclosure. For example, the embodiments described in the present disclosure and/or the technical features in the embodiments can be arbitrarily combined with the existing technologies without conflict, and the technical solution acquired by combination shall also fall within the protection scope of the present disclosure.

It is understandable that in the method embodiments of the present disclosure, sequence numbers of the above processes do not mean the execution order, which shall be determined by their functions and internal logic and shall not limit implementation processes of the embodiments of the present disclosure. In addition, in the embodiments of the present disclosure, the term "and/or" merely indicates an association relationship describing associated objects, that is, three types of relationships. For example, the phrase "A and/or B" indicates (A), (B), or (A and B). In addition, the symbol "/" generally indicates an "or" relationship between the associated objects.

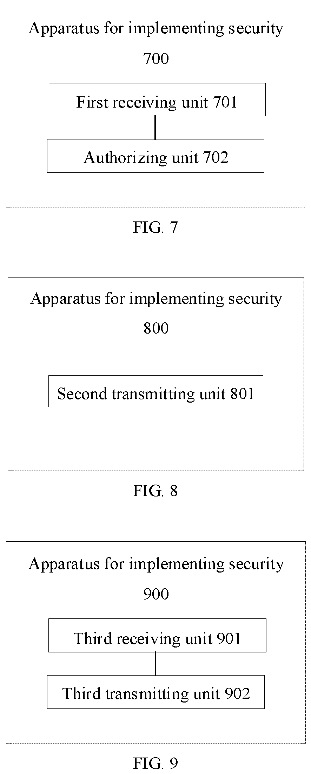

FIG. 7 is a schematic structural diagram of an apparatus 700 for implementing security according to some embodiments of the present disclosure. The apparatus 700 is applicable to the terminal device. As shown in FIG. 7, the apparatus 700 for implementing security includes:

> a first receiving unit 701, configured to receive first request information, wherein the first request information is configured to request an authorization from the terminal device for transmission of sensing data, and the first request information includes an authorization certification for a first network element; and
> an authorizing unit 702, configured to authorize the transmission of the sensing data in response to a successful verification on the authorization certification.

In some embodiments, the first request information further includes a sensing service type, and the authorizing unit 702 is configured to generate, by the terminal device, verification information based on a sensing service key and the sensing service type; and determine that the authorization certification is verified successfully in the case that the verification information is consistent with the authorization certification.

In some embodiments, the apparatus 700 for implementing security further includes a first generating unit, wherein the first generating unit is configured to generate the sensing service key based on a first key, wherein the first key is a key shared by the terminal device and the first network element.

In some embodiments, the first network element is a network element in a GBA, and the first key is a NAF key Ks_NAF; and the first generating unit is further configured to generate the sensing service key based on the NAF key Ks_NAF, the sensing service type, and first network parameters, wherein the first network parameters include a NONCE and/or a COUNT.

In some embodiments, the first network element is a network element in an AKMA architecture, and the first key is an AF key $K_{AF}$; and the first generating unit is further configured to generate the sensing service key based on the AF key $K_{AF}$, the sensing service type, AKMA key identification information, and second network parameters, wherein the second network parameters include a NONCE and/or a COUNT.

In some embodiments, the first generating unit is further configured to generate the sensing service key based on the first key in the case that the terminal device supports the sensing service type.

In some embodiments, the first network element is a network element in an AKA architecture or an EAP-AKA architecture, and the first key is an AMF key $K_{AMF}$ or a SEAF key $K_{SEAF}$; and

> the first generating unit is further configured to generate the sensing service key based on the AMF key $K_{AMF}$, the sensing service type, and third network parameters;
> or
> the first generating unit is further configured to generate the sensing service key based on the SEAF key $K_{SEAF}$, the sensing service type, and third network parameters, wherein
> the third network parameters include a NONCE and/or a COUNT.

In some embodiments, the first generating unit is further configured to generate a first immediate key $K_{AMF}$' based on the AMF key $K_{AMF}$; and generate the sensing service key based on the first immediate key $K_{AMF}$', the sensing service type, and the third network parameters.

In some embodiments, the first generating unit is further configured to generate a second immediate key $K_{SEAF}$' based on the SEAF key $K_{SEAF}$; and generate the sensing service key based on the first immediate key $K_{SEAF}$', the sensing service type, and the third network parameters.

In some embodiments, the first receiving unit 701 is further configured to receive second request information, wherein the second request information is configured to request the sensing service key.

In some embodiments, the apparatus 700 for implementing security further includes a first transmitting unit, wherein the first transmitting unit is configured to transmit confirmation information to the second network element, wherein the confirmation information is configured to instruct the second network element to transmit the sensing service key to the first network element.

In some embodiments, the confirmation information further includes a verification parameter, wherein the verification parameter is configured for the second network element to verify the sensing service type.

In some embodiments, the first request information further includes a sensing service type, and the first transmitting unit is further configured to transmit sensing data matched with the sensing service type to a third network element.

In some embodiments, integrity protection and/or encryption of the first request information and/or the sensing data is performed based on a sensing service key.

FIG. 8 is a schematic structural diagram of an apparatus 800 for implementing security according to some embodiments of the present disclosure. The apparatus 800 is applicable to the first network element. As shown in FIG. 8, the apparatus 800 for implementing security includes:

a second transmitting unit 801, configured to transmit first request information, wherein the first request information is configured to request an authorization from a terminal device for transmission of sensing data, and the first request information includes an authorization certification for the first network element, wherein the authorization certification is configured for the terminal device to verify an authorization of the first network element.

In some embodiments, the apparatus 800 for implementing security further includes a second generating unit, wherein

the second generating unit is configured to generate the authorization certification based on a sensing service type and a sensing service key.

In some embodiments, the sensing service key is generated based a first key, wherein the first key is a key shared by the terminal device and the first network element.

In some embodiments, the first network element is a network element in a GBA, and the first key is a NAF key Ks_NAF; and the second generating unit is further configured to generate the sensing service key based on the NAF key Ks_NAF, the sensing service type, and first network parameters, wherein

the first network parameters include a NONCE and/or a COUNT.

In some embodiments, the first network element is a network element in an AKMA architecture, and the first key is an AF key $K_{AF}$; and the second generating unit is further configured to generate the sensing service key based on the AF key $K_{AF}$, the sensing service type, AKMA key identification information, and second network parameters, wherein

the second network parameters include a NONCE and/or a COUNT.

In some embodiments, the first network element is a network element in an AKA architecture or an EAP-AKA architecture, and the first key is an AMF key $K_{AMF}$ or a SEAF key $K_{SEAF}$; and

the second transmitting unit 801 is further configured to transmit second request information to a second network element, wherein the second request information is configured to request the sensing service key, the sensing service key being generated by the second network element based on the AMF key $K_{AMF}$ or the SEAF key $K_{SEAF}$; and

the apparatus 800 for implementing security further includes a second receiving unit, wherein the second receiving unit is configured to receive the sensing service key from the second network element.

In some embodiments, integrity protection and/or encryption of the first request information is performed based on the sensing service key.

FIG. 9 is a schematic structural diagram of an apparatus 900 for implementing security according to some embodiments of the present disclosure. The apparatus 900 is applicable to the second network element. As shown in FIG. 9, the apparatus 900 for implementing security includes:

a third receiving unit 901, configured to receive first request information from a first network element, wherein the first request information is configured to request an authorization from a terminal device for transmission of sensing data, and the first request information includes an authorization certification for the first network element; and

a third transmitting unit 902, configured to transmit the first request information to the terminal device.

In some embodiments, the first network element is a network element in an AKA architecture or an EAP-AKA architecture; and

the third receiving unit 901 is further configured to receive second request information from the first network element, wherein the second request information is configured to request a sensing service key; and

the third transmitting unit 902 is further configured to transmit the second request information the terminal device.

In some embodiments, the third receiving unit 901 is further configured to receive confirmation information from the terminal device, wherein the confirmation information is configured to instruct the second network element to transmit the sensing service key to the first network element;

the apparatus 900 for implementing security further includes a third generating unit, wherein the third generating unit is configured to generate the sensing service key based on a first key, wherein the first key is a key shared by the terminal device and the first network element; and
the third transmitting unit 902 is further configured to transmit the sensing service key to the first network element.

In some embodiments, the first key includes an AMF key $K_{AMF}$ or a SEAF key $K_{SEAF}$, and

the third generating unit is further configured to generate the sensing service key based on the AMF key $K_{AMF}$, a sensing service type, and third network parameters,
or
the third generating unit is further configured to generate the sensing service key based on the SEAF key $K_{SEAF}$, a sensing service type, and third network parameters, wherein
the third network parameters include a NONCE and/or a COUNT.

In some embodiments, the third generating unit is further configured to generate an immediate key $K_{AMF}$' based on the AMF key $K_{AMF}$; and generate the sensing service key based on the immediate key $K_{AMF}$', the sensing service type, and the third network parameters.
In some embodiments, the third generating unit is further configured to generate a second immediate key $K_{SEAF}$' based on the SEAF key $K_{SEAF}$; and generate the sensing service key based on the first immediate key $K_{SEAF}$', the sensing service type, and the third network parameters.
In some embodiments, the third generating unit is further configured to generate verification parameter verification information; and determine to generate the sensing service key based on the first key in the case that the verification parameter verification information is consistent with the verification parameter.
It should be understood by those skilled in the art that related descriptions of the apparatus for implementing security in the embodiments of the present disclosure are made to the related descriptions of the method for implementing security in the embodiments of the present disclosure.

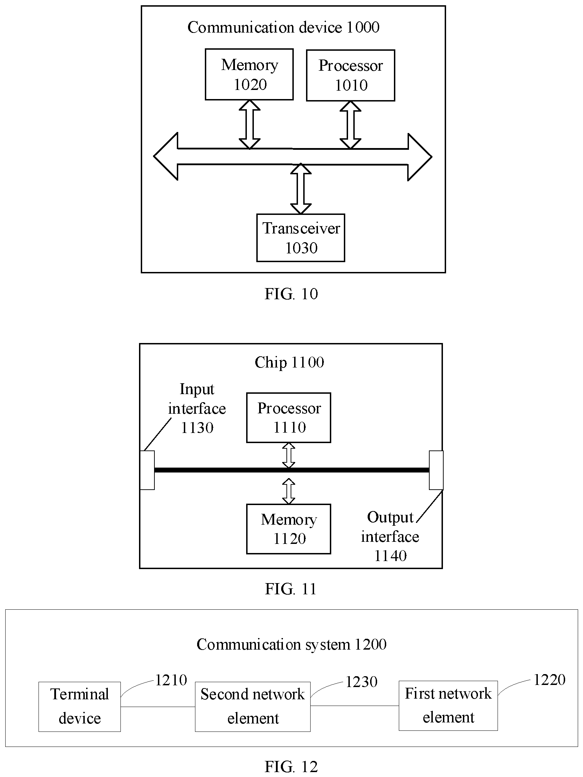

FIG. 10 is a schematic structural diagram of a communication device 1000 according to some embodiments of the present disclosure. The communication device is the terminal device, the first network element, or the second network element. The communication device 1000 shown in FIG. 10 includes a processor 1010. The processor 1010, when loading and running one or more computer programs in a memory, is caused to perform the method as described in the embodiments of the present disclosure.
In some embodiments, as shown in FIG. 10, the communication device 1000 further includes a memory 1020. The processor 1010, when loading and running one or more computer programs in the memory 1020, is caused to perform the method as described in the embodiments of the present disclosure.
The memory 1020 is a device independent of the processor 1010, or the memory 1020 is integrated in the processor 1010.
In some embodiments, as shown in FIG. 10, the communication device 1000 further includes a transceiver 1030. The processor 1010 controls the transceiver 1030 to communicate with other devices. For example, the processor 1010 controls the transceiver 1030 to transmit information or data to other devices, or receive information or data from other devices.
The transceiver 1030 may include a transmitter and a receiver. The transceiver 1030 may further include one or more antennas.
In some embodiments, the communication device 1000 is the terminal device according to the embodiments of the present disclosure, and the communication device 1000 performs the corresponding processes performed by the terminal device according to the methods described in the embodiments of the present disclosure, which are not described herein for brevity.
In some embodiments, the communication device 1000 is the first network element according to the embodiments of the present disclosure, and the communication device 1000 performs the corresponding processes performed by the first network element according to the methods described in the embodiments of the present disclosure, which are not described herein for brevity.
In some embodiments, the communication device 1000 is the second network element according to the embodiments of the present disclosure, and the communication device 1000 performs the corresponding processes performed by the second network element according to the methods described in the embodiments of the present disclosure, which are not described herein for brevity.

FIG. 11 is a schematic structural diagram of a chip according to some embodiments of the present disclosure. The chip 1100 includes a processor 1110. The processor 1110, when loading and running one or more computer programs in a memory, is caused to perform the method as described in the embodiments of the present disclosure.

In some embodiments, as shown in FIG. 11, the chip 1100 further includes a memory 1120. The processor 1110, when loading and running one or more computer programs in the memory 1120, is caused to perform the method as described in the embodiments of the present disclosure.

The memory 1120 is a device independent of the processor 1110, or the memory 1120 is integrated in the processor 1110.

In some embodiments, the chip 1100 further includes an input interface 1130. The processor 1110 controls the input interface 1130 to communicate with other devices or the chip. For example, the processor 1110 controls the input interface 1130 to acquire information or data from other devices or the chip.

In some embodiments, the chip 1100 further includes an output interface 1140. The processor 1110 controls the output interface 1140 to communicate with other devices or the chip. For example, the processor 1110 controls the output interface 1140 to output information or data to other devices or the chip.

In some embodiments, the chip is applicable to the mobile terminal/terminal device according to the embodiments of the present disclosure, and the chip performs the corresponding processes performed by the mobile terminal/terminal device according to the methods described in the embodiments of the present disclosure, which are not described herein for brevity.

In some embodiments, the chip is applicable to the first network element according to the embodiments of the present disclosure, and the chip performs the corresponding processes performed by the first network element in the methods according to the methods described in the embodiments of the present disclosure, which are not described herein for brevity.

In some embodiments, the chip is applicable to the second network element according to the embodiments of the present disclosure, and the chip performs the corresponding processes performed by the second network element according to the methods described in the embodiments of the present disclosure, which are not described herein for brevity.

It is understandable that the chip in the embodiments of the present disclosure is also referred to as a system-level chip, a system chip, a chip system, a system-on-chip, or the like.

FIG. 12 is a schematic block diagram of a communication system 1200 according to some embodiments of the present disclosure. As shown in FIG. 12, the communication system 1200 includes a terminal device 1210, a first network element 1220, and a second network element 1230.

The terminal device 1210 performs the corresponding processes performed by the terminal device in the above methods, the first network element 1220 performs the corresponding processes performed by the first network element in the above methods, and the second network element 1230 performs the corresponding processes performed by the second network element in the above methods, which are not described herein for brevity.

It is understandable that the processor in the embodiments of the present disclosure is an integrated circuit chip with a signal processing capability. In the implementations, the processes in the method embodiments are achieved by integrated logic circuits of hardware in the processor or instructions in the software form. The above processor is a general processor, a digital signal processor (DSP), an application-specific integrated circuit (ASIC), a field-programmable gate array (FPGA), other programmable logic devices, discrete gates, transistor logic devices, or discrete hardware assemblies that can achieve or perform various methods, processes, and logic blocks according to the embodiments of the present disclosure. The general processor is a microprocessor, any conventional processor, or the like. The processes in conjunction with the method in the embodiments of the present disclosure can be directly embodied as a hardware decoding processor for processing or be performed by a combination of hardware and software modules in the decoding processor. The software modules are disposed in a random access memory, a flash memory, a read-only memory, a programmable read-only memory, an electrically erasable programmable memory, a register, and other storage mediums mature in the field. The storage medium is disposed in the memory, and the processor reads the information in the memory and combines with its hardware to perform the processes of the above method.

It is understandable that the memory in embodiments of the present disclosure is a volatile memory or a non-volatile memory, or includes both the volatile memory and the non-volatile memory. The non-volatile memory is a read-only memory (ROM), a programmable ROM (PROM), an erasable PROM (EPROM), an electrically EPROM (EEPROM), or a flash memory. The volatile memory is a random access memory (RAM) used as an external cache. By way of example but not limitation, many forms of RAMs are available, such as a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM), and a direct rambus RAM (DR RAM). It should be noted that the system and the memory described herein are intended to include, but not limit to these and any other suitable type of memories.

It is understandable that the above memory is exemplary but not for limitation. For example, the memory in the embodiments of the present disclosure is also an SRAM, a DRAM, an SDRAM, a DDR SDRAM, an ESDRAM, an SLDRAM, a DR RAM, or the like. That is, the memory in the embodiments of the present disclosure is intend to include, but not limit to these and any other suitable type of memory.

Embodiments of the present disclosure further provide a computer-readable storage medium for storing one or more computer programs.

In some embodiments, the computer-readable storage medium is applicable to the network device in the embodiments of the present disclosure, and the one or more computer programs, when loaded and run on a computer, cause the computer to perform the corresponding processes performed by the network device in the methods according to the embodiments of the present disclosure, which are not described herein for brevity.

In some embodiments, the computer-readable storage medium is applicable to the mobile terminal/terminal device in the embodiments of the present disclosure, and the one or more computer programs, when loaded and run on a computer, cause the computer to perform the corresponding processes performed by the mobile terminal/terminal device in the methods according to the embodiments of the present disclosure, which are not described herein for brevity.

Embodiments of the present disclosure further provide a computer program product including one or more computer program instructions.

In some embodiments, the computer program product is applicable to the network device in the embodiments of the present disclosure, and the one or more computer program instructions, when loaded and executed by a computer, cause the computer to perform the corresponding processes performed by the network device in the methods according to the embodiments of the present disclosure, which are not described herein for brevity.

In some embodiments, the computer program product is applicable to the mobile terminal/terminal device in the embodiments of the present disclosure, and the one or more computer program instructions, when loaded and executed by a computer, cause the computer to perform the corresponding processes performed by the mobile terminal/terminal device in the methods according to the embodiments of the present disclosure, which are not described herein for brevity.

Embodiments of the present disclosure further provide a computer program.

In some embodiments, the computer program is applicable to the network device in the embodiments of the present disclosure, and the computer program, when loaded and run by a computer, causes the computer to perform the corresponding processes performed by the network device in the methods according to the embodiment of the present disclosure, which are not described herein for brevity.

In some embodiments, the computer program is applicable to the mobile terminal/terminal device in the embodiments of the present disclosure, and the computer program, when loaded and run by a computer, causes the computer to perform the corresponding processes performed by the mobile terminal/terminal device in the methods according to the embodiments of the present disclosure, which are not described herein for brevity.

It can be understood by those of ordinary skill in the art that the units and algorithmic processes of the examples described in conjunction with the embodiments disclosed herein can be achieved by the electronic hardware, or by a combination of the computer software and the electronic hardware. Whether these functions are implemented by the hardware or the software depends on the specific application and design constraints of the technical solution. With respect to each application, those skilled in the art may use different methods to achieve the described functions, and such implementations should not be considered beyond the scope of the present disclosure.

It can be understood by those skilled in the art that with respect to the specific operation processes of the system, device, and unit described above, reference is made to the corresponding processes in the above method embodiments for convenience and simplicity of description, which are not repeated herein.

In the embodiments of the present disclosure, it is understandable that the systems, devices, and methods can be implemented in other ways. For example, the above apparatus embodiments are only exemplary. For example, the division of the units is only the logical function division, and the actual implementation may have another division. For example, several units or assemblies can be combined or integrated into another system, or some features can be ignored or not performed. In addition, the coupling, the direct coupling, or the communication connection between each other may be achieved by some interfaces, and the indirect coupling or communication connection between devices or units may be electrical, mechanical or in other form.

The units described as separate parts may or may not be physically separate, and the parts shown as the units may or may not be physical units. That is, the parts may be disposed in one place, or distributed in several network units. Some or all of the units can be selected based on actual needs to achieve the purpose of the technical solutions according to the embodiments.

In addition, the functional units in the embodiments of the present disclosure may be integrated in a processing unit or exist physically separately, or two or more units may be integrated in a unit.

In the case that the functions are achieved in the form of software functional units and sold or used as stand-alone products, the functions may be stored in a computer-readable storage medium. Based on this understanding, the nature of the technical solutions of the present disclosure, the part contributed to the prior art, or the part of the technical solutions may be embodied in the form of a software product, wherein the software product is stored in a storage medium and includes a number of instructions for causing a computer device (which may be a personal computer, a server, a network equipment, or the like) to perform all or part of the processes of the method in various embodiments of the present disclosure. The above storage medium include: a U disk, a mobile hard disk, a ROM, a RAM, a disk, a disc, or other medium that can store program codes.

Described above are merely specific embodiments of the present disclosure, and the protection scope of the present disclosure is not limited. Any changes or replacements made within the technical scope of the present disclosure by those skilled in the art should be encompassed within the protection scope of the present disclosure. Thus, the protection scope of the present disclosure shall prevail in the protection scope of the claims.

**Claims**

1. A method for implementing security, applicable to a terminal device, the method comprising:

   receiving first request information, wherein the first request information is configured to request an authorization from the terminal device for transmission of sensing data, and the first request information comprises an authorization certification for a first network element; and
   authorizing the transmission of the sensing data in response to a successful verification on the authorization certification.

2. The method according to claim 1, wherein the first request information further comprises a sensing service type, and the method further comprises:

   generating verification information based on a sensing service key and the sensing service type; and
   determining that the authorization certification is verified successfully in a case that the verification information is consistent with the authorization certification.

3. The method according to claim 2, wherein prior to generating the verification information based on the sensing service key and the sensing service type, the method further comprises:
   generating the sensing service key based on a first key, wherein the first key is a key shared by the terminal device and the first network element.

4. The method according to claim 3, wherein the first network element is a network element in a generic bootstrapping architecture (GBA), and the first key is a network application function (NAF) key Ks_NAF; and
   generating the sensing service key based on the first key comprises:
   generating the sensing service key based on the NAF key Ks_NAF, the sensing service type, and first network parameters, wherein the first network parameters comprise a random number (NONCE) and/or a count value (COUNT).

5. The method according to claim 3, wherein the first network element is a network element in an authentication and key management for applications (AKMA) architecture, and the first key is an application function (AF) key $K_{AF}$; and
   generating the sensing service key based on the first key comprises:
   generating the sensing service key based on the AF key $K_{AF}$, the sensing service type, AKMA key identification information, and second network parameters, wherein the second network parameters comprise a random number (NONCE) and/or a count value (COUNT).

6. The method according to claim 4 or 5, wherein generating the sensing service key based on the first key comprises:
   generating the sensing service key based on the first key in a case that the terminal device supports the sensing service type.

7. The method according to claim 3, wherein the first network element is a network element in an authentication and key agreement (AKA) architecture or an extensible authentication protocol-authentication and key agreement (EAP-AKA) architecture, and the first key is an access and mobility management function (AMF) key $K_{AMF}$ or a security anchor function (SEAF) key $K_{SEAF}$; and
   generating the sensing service key based on the first key comprises:

   generating the sensing service key based on the AMF key $K_{AMF}$, the sensing service type, and third network parameters; or
   generating the sensing service key based on the SEAF key $K_{SEAF}$, the sensing service type, and third network parameters; wherein
the third network parameters comprise a random number (NONCE) and/or a count value (COUNT).

8. The method according to claim 7, wherein

generating the sensing service key based on the AMF key $K_{AMF}$, the sensing service type, and the third network parameters comprises:

generating a first immediate key $K_{AMF}'$ based on the AMF key $K_{AMF}$; and
generating the sensing service key based on the first immediate key $K_{AMF}'$, the sensing service type, and the third network parameters; and

generating the sensing service key based on the SEAF key $K_{SEAF}$, the sensing service type, and the third network parameters comprises:

generating a second immediate key $K_{SEAF}'$ based on the SEAF key $K_{SEAF}$; and
generating the sensing service key based on the first immediate key $K_{SEAF}'$, the sensing service type, and the third network parameters.

9. The method according to claim 7 or 8, wherein

prior to generating the sensing service key based on the first key, the method further comprises:
receiving second request information, wherein the second request information is configured to request the sensing service key; and
upon generating the sensing service key based on the first key, the method further comprises:
transmitting confirmation information to a second network element, wherein the confirmation information is configured to instruct the second network element to transmit the sensing service key to the first network element.

10. The method according to claim 9, wherein the confirmation information further comprises a verification parameter, wherein the verification parameter is configured for the second network element to verify the sensing service type.

11. The method according to any one of claims 1 to 10, wherein the first request information comprises a sensing service type, and the method further comprises:
transmitting sensing data matched with the sensing service type to a third network element.

12. The method according to claim 11, wherein integrity protection and/or encryption of the first request information and/or the sensing data is performed based on a sensing service key.

13. A method for implementing security, applicable to a first network element, the method comprising:
transmitting first request information, wherein the first request information is configured to request an authorization from a terminal device for transmission of sensing data, and the first request information comprises an authorization certification for the first network element, wherein the authorization certification is configured for the terminal device to verify an authorization of the first network element.

14. The method according to claim 13, wherein prior to transmitting the first request information, the method further comprises:
generating the authorization certification based on a sensing service type and a sensing service key.

15. The method according to claim 14, wherein the sensing service key is generated based a first key, wherein the first key is a key shared by the terminal device and the first network element.

16. The method according to claim 15, wherein the first network element is a network element in a generic bootstrapping architecture (GBA), and the first key is a network application function (NAF) key Ks_NAF; and
prior to generating the authorization certification based on the sensing service type and the sensing service key, the method further comprises:
generating the sensing service key based on the NAF key Ks_NAF, the sensing service type, and first network parameters, wherein the first network parameters comprise a random number (NONCE) and/or a count value (COUNT).

17. The method according to claim 15, wherein the first network element is a network element in an authentication and key management for applications (AKMA) architecture, and the first key is an application function (AF) key $K_{AF}$; and prior to generating the authorization certification based on the sensing service type and the sensing service key, the method further comprises:

generating the sensing service key based on the AF key $K_{AF}$, the sensing service type, AKMA key identification information, and second network parameters, wherein the second network parameters comprise a random number (NONCE) and/or a count value (COUNT).

18. The method according to claim 15, wherein the first network element is a network element in an authentication and key agreement (AKA) architecture or an extensible authentication protocol-authentication and key agreement (EAP-AKA) architecture, and the first key is an access and mobility management function (AMF) key $K_{AMF}$ or a security anchor function (SEAF) key $K_{SEAF}$; and prior to generating the authorization certification based on the sensing service type and the sensing service key, the method further comprises:

transmitting second request information to a second network element, wherein the second request information is configured to request the sensing service key, the sensing service key being generated by the second network element based on the AMF key $K_{AMF}$ or the SEAF key $K_{SEAF}$; and receiving the sensing service key from the second network element.

19. The method according to any one of claims 13 to 18, wherein integrity protection and/or encryption the first request information is performed based on a sensing service key.

20. A method for implementing security, applicable to a second network element, comprising:

receiving first request information from a first network element, wherein the first request information is configured to request an authorization from a terminal device for transmission of sensing data, and the first request information comprises an authorization certification for the first network element; and transmitting the first request information to the terminal device.

21. The method according to claim 20, wherein the first network element is a network element in an authentication and key agreement (AKA) architecture or an extensible authentication protocol-authentication and key agreement (EAP-AKA) architecture; and prior to receiving the first request information from the first network element, the method further comprises:

receiving second request information from the first network element, wherein the second request information is configured to request a sensing service key; and transmitting the second request information the terminal device.

22. The method according to claim 21, further comprising:

receiving confirmation information from the terminal device, wherein the confirmation information is configured to instruct the second network element to transmit the sensing service key to the first network element; generating the sensing service key based on a first key, wherein the first key is a key shared by the terminal device and the first network element; and transmitting the sensing service key to the first network element.

23. The method according to claim 22, wherein the first key comprises an access and mobility management function (AMF) key $K_{AMF}$ or a security anchor function (SEAF) key $K_{SEAF}$; and generating the sensing service key based on the first key comprises:

generating the sensing service key based on the AMF key $K_{AMF}$, a sensing service type, and third network parameters or generating the sensing service key based on the SEAF key $K_{SEAF}$, a sensing service type, and third network parameters; wherein the third network parameters comprise a random number (NONCE) and/or a count value (COUNT).

24. The method according to claim 23, wherein

generating the sensing service key based on the AMF key $K_{AMF}$, the sensing service type, and the third network parameters comprises:

generating an immediate key $K_{AMF}'$ based on the AMF key $K_{AMF}$; and
generating the sensing service key based on the immediate key $K_{AMF}'$, the sensing service type, and the third network parameters; and

the generating the sensing service key based on the SEAF key $K_{SEAF}$, the sensing service type, and the third network parameters comprises:

generating a second immediate key $K_{SEAF}'$ based on the SEAF key $K_{SEAF}$; and
generating the sensing service key based on the first immediate key $K_{SEAF}'$, the sensing service type, and the third network parameters.

25. The method according to any one of claims 22 to 24, wherein the confirmation information comprises a verification parameter, wherein the verification parameter is configured for the second network element to verify the sensing service type; and the method further comprises:

generating verification parameter verification information; and
determining to generate the sensing service key based on the first key in a case that the verification parameter verification information is consistent with the verification parameter.

26. An apparatus for implementing security, applicable to a terminal device, the apparatus comprising:

a first receiving unit, configured to receive first request information, wherein the first request information is configured to request an authorization from the terminal device for transmission of sensing data, and the first request information comprises an authorization certification for a first network element; and
a first authorizing unit, configured to authorize the transmission of the sensing data in response to a successful verification on the authorization certification.

27. An apparatus for implementing security, applicable to a first network element, the apparatus comprising:
a second transmitting unit, configured to transmit first request information, wherein the first request information is configured to request an authorization from a terminal device for transmission of sensing data, and the first request information comprises an authorization certification for the first network element, wherein the authorization certification is configured for the terminal device to verify an authorization of the first network element.

28. An apparatus for implementing security, applicable to a second network element, the apparatus comprising:

a third receiving unit, configured to receive first request information from a first network element, wherein the first request information is configured to request an authorization from a terminal device for transmission of sensing data, and the first request information comprises an authorization certification for the first network element; and
a third transmitting unit, configured to transmit the first request information to the terminal device.

29. A terminal device, comprising: a processor and a memory storing one or more computer programs, wherein the processor, when loading and running the one or more computer programs in the memory, is caused to perform the method as defined in any one of claims 1 to 12.

30. A first network element, comprising: a processor and a memory storing one or more computer programs, wherein the processor, when loading and running the one or more computer programs in the memory, is caused to perform the method as defined in any one of claims 13 to 19.

31. A second network element, comprising: a processor and a memory storing one or more computer programs, wherein the processor, when loading and running the one or more computer programs in the memory, is caused to perform the method as defined in any one of claims 20 to 25.

32. A chip, comprising: a processor, wherein the processor, when loading and running one or more computer programs in a memory, causes a device equipped with the chip to perform the method as defined in any one of claims 1 to 12.

33. A chip, comprising: a processor, wherein the processor, when loading and running one or more computer programs in a memory, causes a device equipped with the chip to perform the method as defined in any one of claims 13 to 19.

34. A chip, comprising: a processor, wherein the processor, when loading and running one or more computer programs in a memory, causes a device equipped with the chip to perform the method as defined in any one of claims 20 to 25.

35. A computer-readable storage medium, storing one or more computer programs, wherein the one or more computer programs, when loaded and run by a computer, cause the computer to perform the method as defined in any one of claims 1 to 12.

36. A computer-readable storage medium, storing one or more computer programs, wherein the one or more computer programs, when loaded and run by a computer, cause the computer to perform the method as defined in any one of claims 13 to 19.

37. A computer-readable storage medium, storing one or more computer programs, wherein the one or more computer programs, when loaded and run by a computer, cause the computer to perform the method as defined in any one of claims 20 to 25.

38. A computer program product, comprising one or more computer instructions, wherein the one or more computer instructions, when loaded and executed by a computer, cause the computer to perform the method as defined in any one of claims 1 to 12.

39. A computer program product, comprising one or more computer instructions, wherein the one or more computer instructions, when loaded and executed by a computer, cause the computer to perform the method as defined in any one of claims 13 to 19.

40. A computer program product, comprising one or more computer instructions, wherein the one or more computer instructions, when loaded and executed by a computer, cause the computer to perform the method as defined in any one of claims 20 to 25.

41. A computer program, wherein the computer program, when loaded and run by a computer, cause the computer to perform the method as defined in any one of claims 1 to 12.

42. A computer program, wherein the computer program, when loaded and run by a computer, cause the computer to perform the method as defined in any one of claims 13 to 19.

43. A computer program, wherein the computer program, when loaded and run by a computer, cause the computer to perform the method as defined in any one of claims 20 to 25.

<u>100</u>

Third-party
application network

NEF

AF → Sensing control
network element → Sensing
collection entity

Core
network

AMF

Terminal
device

Terminal
device

FIG. 1

Terminal
device

First network
element

S210 and S220: First request information, wherein the first request
information is configured to request an authorization from the terminal
device for transmission of sensing data, and the first request information
includes an authorization certification of the first network element

S230: Authorizing the transmission of the
sensing data in response to a successful
verification on the authorization certification

FIG. 2

| Terminal device | | First network element |
|---|---|---|
| | | S200: Generating an authorization certification based on a sensing service type and a sensing service key |

S210 and S220: First request information, wherein the first request information is configured to request an authorization from the terminal device for transmission of sensing data, and the first request information includes the authorization certification of the first network element

S240: Generating authorization certification verification information based on the sensing service key and the sensing service type

S250: Determining that the authorization certification is verified successfully in the case that the authorization certification verification information is consistent with the authorization certification

S230: Authorizing the transmission of the sensing data in response to verifying the authorization certification successfully

FIG. 3

EP 4 489 343 A1

| Terminal device | Second network element AMF or AUSF | UPF | First network element NAF | Third network element |

S400: Authenticating and sharing a key Ks_NAF based on a GBA process

S401: Generating a sensing service key Ka_ST based on the key Ks_NAF

S402: Generating an authorization certification Token_Service Type based on a sensing service type and the sensing service key Ka_ST

S403: Receiving, by the terminal device, the first request information

S403: Transmitting, by the first network element, the first request information

S404: Generating the sensing service key Ka_ST based on the key Ks_NAF

S405: Generating authorization certification verification information based on the sensing service type and the sensing service key Ka_ST

S406: Authorizing the transmission of sensing data in the case that the authorization certification verification information is consistent with the authorization certification

S407: Transmitting the sensing data

S407: Transmitting the sensing data

FIG. 4

28

FIG. 5

| Terminal device | Second network element AMF or AUSF | UPF | First network element | Third network element |
|---|---|---|---|---|

S600: Authenticating and sharing a key $K_{AMF}$ or a key $K_{SEAF}$ based on an AKA process or an EAP-AKA process

S601: Transmitting, by the first network element, the second request information, wherein the second request information is configured to request a sensing service key

S601: Receiving, by the terminal device, the second request information

S602: Generating a sensing service key Ka_ST based on a sensing service type and the key $K_{AMF}$ (or the key $K_{SEAF}$)

S603: Transmitting confirmation information configured to instruct the second network element to transmit the sensing service key Ka_ST to the first network element

S606: Generating the sensing service key Ka_ST

S605:Transmitting the sensing service key Ka_ST

S606: Generating an authorization certification Token_Service Type based on the sensing service type and the sensing service key Ka_ST

S607: Receiving, by the terminal device, the first request information

S607: Transmitting, by the first network element, the first request information

S608: Generating authorization certification verification information based on the sensing service type and the sensing service key Ka_ST

S609: Authorizing the transmission of sensing data in the case that the authorization certification verification information is consistent with the authorization certification

S610: Transmitting the sensing data

S610: Transmitting the sensing data

FIG. 6

Apparatus for implementing security
700

First receiving unit 701

Authorizing unit 702

FIG. 7

Apparatus for implementing security
800

Second transmitting unit 801

FIG. 8

Apparatus for implementing security
900

Third receiving unit 901

Third transmitting unit 902

FIG. 9

Communication device 1000

Memory 1020

Processor 1010

Transceiver 1030

FIG. 10

Chip 1100

Input interface 1130

Processor 1110

Memory 1120

Output interface 1140

FIG. 11

Communication system 1200

Terminal device 1210

Second network element 1230

First network element 1220

FIG. 12

## INTERNATIONAL SEARCH REPORT

| International application No. |
|---|
| **PCT/CN2022/078411** |

| A. | CLASSIFICATION OF SUBJECT MATTER |
|---|---|
| | H04L 9/32(2006.01)i |

According to International Patent Classification (IPC) or to both national classification and IPC

| B. | FIELDS SEARCHED |
|---|---|

Minimum documentation searched (classification system followed by classification symbols)

H04L; H04W; G06F

Documentation searched other than minimum documentation to the extent that such documents are included in the fields searched

Electronic data base consulted during the international search (name of data base and, where practicable, search terms used)

CNTXT; WPABS; ENTXT; 3GPP; CNKI: 终端; 用户; 请求; 验证; 检验; 敏感数据; 感知数据; 个人数据; 凭据; 授权; 令牌; 凭证; user; terminal; UE; request+; ask+; certificat+; authenticat+; token?; credence?; evidence?; verificat+; authori+; verify; token; credential?; service; type; network; element; information?; data?; akma; Ks_naf; count; nonce; Kaf; AKA; kamf; parameter?; kseaf

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 113312653 A (AGRICULTURAL BANK OF CHINA) 27 August 2021 (2021-08-27) description, paragraphs 0032, 0075-0080, and 0183-0187 | 1-3, 11-15, 19-20, 26-43 |
| Y | CN 113312653 A (AGRICULTURAL BANK OF CHINA) 27 August 2021 (2021-08-27) description, paragraphs 0032, 0075-0080, and 0183-0187 | 7-10, 18, 21-25 |
| Y | NEC EUROPE LTD. "S3-170157 "pCR to TR 33.899_Update solution #1.8 key hierarchy for NextGen"" *3GPP tsg_sa\WG3_Security,* 30 January 2017 (2017-01-30), see section 5.1.4.8.2.3 | 7-10, 18, 21-25 |
| A | CN 105245552 A (BEIJING JINGDONG CENTURY TRADING CO., LTD.) 13 January 2016 (2016-01-13) entire document | 1-43 |
| A | Huawei et al. "S3-192065 "Resovle Editor amp#apos#s notes in Solution for Key freshness in AKMA"" *3GPP tsg_sa\wg3_security,* 17 June 2019 (2019-06-17), entire document | 1-43 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **22 August 2022** | **29 August 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/078411**

| Patent document cited in search report | | | Publication date (day/month/year) | Patent family member(s) | Publication date (day/month/year) |
|---|---|---|---|---|---|
| CN | 113312653 | A | 27 August 2021 | None | |
| CN | 105245552 | A | 13 January 2016 | None | |

Form PCT/ISA/210 (patent family annex) (January 2015)